# EUROPEAN PATENT SPECIFICATION

(11) **EP 3 863 139 B1**
(45) Date of publication and mention of the grant of the patent: **26.11.2025**
(21) Application number: 20155428.4
(22) Date of filing: 04.02.2020
(51) Int. Cl.: H02G 5/00, H02B 1/20

(54) **CONNECTION OF LAMINATED BUSBARS OF NEIGHBORED SECTIONS UNDER LIMITED REAR ACCESS**
VERBINDUNG VON LAMINIERTEN SAMMELSCHIENEN VON BENACHBARTEN ABSCHNITTEN UNTER BESCHRÄNKTEM RÜCKWÄRTIGEM ZUGANG
CONNEXION DE BARRES OMNIBUS LAMINÉES ADJACENTES SOUS ACCÈS ARRIÈRE LIMITÉ

(43) Date of publication of application: 11.08.2021
(73) Proprietor: ABB Schweiz AG, 5400 Baden (CH)
(72) Inventor: Malis, Jan, 61500 Brno (CZ); Vitek, Libor, 67571 Namest nad Oslavou (CZ)
(74) Representative: Zimmermann & Partner Patentanwälte mbB

(56) References cited:
- WO-A1-2013/166562
- WO-A1-2019/201419
- WO-A1-2019/201429

## Description

The invention is related to a conductor to electrically connect two neighbored laminated busbars of a switchgear.

WO 2019/201 419 A1 and WO 2019/201 429 A1 show a conductor of this type. WO 2013/166 562 A1 shows a lamellar switchboard comprising panels having edge formations arranged to provide connecting formations and complementary connecting formations.

Laminated busbars are used in switchgears to conduct electrical current. A laminated busbar comprises several layers of conducting sheets which are separated from each other by electrically insulating sheetlike materials. Laminated busbars are flat and can conduct a number of phases of electrical current, wherein the number of phases depends on the number of conducting sheets. Laminated busbars are shown for example in DE 10 2005 015 945 B4.

Such laminated busbars often are arranged at the rear side of a switchgear or of a switchboard or of a housing. If some sections of a switchgear or several switchgears have to be connected, different laminated busbars have to be connected to each other to conduct electrical current from one section to the other or from one switchboard to another. Each conducting sheet of a first laminated busbar has to be electrically connected to the corresponding conducting sheet of the second, neighbored laminated busbar by a so called shipping split connection, which comprises a further electrically conductive sheet acting as a link or a bridge, namely the conductive bridging sheet.

If such laminated busbars are arranged at a rear side of a switchgear or of a switchboard or of a housing, access to those busbars may be difficult. Insofar, connecting and disconnecting of busbars may be difficult as well.

The object of the invention therefore is to allow an electrically conductive connecting and disconnecting of laminated busbars in situations where access from a rear side of a switchgear or switchboard is limited, and to prevent damages of the laminated busbars and the switchgear or switchboard.

The object of the invention is achieved by means of the features of claim 1.

According to this claim the rear part is movable relative to the front part, wherein the front part comprises an actor, which is couplable with a counterpart of the rear part and wherein moving or acting the actor moves the rear part to the front part.

According to the invention first it has been found that a conductor is used to provide an electrically conductive bridge between laminated busbars of neighbored sections. Such a conductor, which is also called shipping split connection by the person skilled in the art, comprises a front part and a rear part and further comprises pressure clamps. The front part provides a connection between the phases L1 and L2 of neighbored laminated busbars and the rear part provides a connection between the L3 phases. In case of a four pole arrangement the rear part connects the L3 and L4 phases (Neutral). When the contact areas of the conductor overlap the contact areas of the laminated busbars, a pressure is applied by tightening bolts of pressure clamps to secure an electrically conductive connection between the phases of the laminated busbars arranged in neighbored sections.

Further it has been found, that currently, an assembly procedure using such a conductor requires at least two workers and an access from a rear side of a switchgear or switchboard. When sections are aligned and their frames are connected together, one operator holds a rear part of the conductor on the rear side of the laminated busbars and a second operator holds a front part of the conductor on the front side of the laminated busbars. When both parts of the conductor are in correct positions, the operator adds pressure clamps and tightens them by bolts to secure an electrically conductive connection between neighbored laminated busbars.

Further, it has been found, that such a solution cannot be used if there is a limited or impossible access from the rear side of the switchgear or switchboard, which is a common situation, when switchgear sections are already installed on customer sites. Sometimes it is also necessary to disassemble sections on site, but without access from the rear side of the switchgear or switchboard, it would be difficult or even impossible to disassemble the conductor or shipping split connection without damage. The invention solves these drawbacks in that way that a rear access is not required for connecting and disconnecting laminated busbars. The invention uses a kind of preassembling of the rear part.

Advantageously, the actor is a bolt which engages in an entry or insert nut of the rear part and meshes with a thread of the entry or insert nut. By acting, turning or moving the bolt the rear part is moved in the direction of the front part without any access to the rear side of a housing of a switchgear or switchboard.

The actor pulls the rear part against the force of a spring in the direction of the front part. Through this also a disassembling is very easy. The force of the spring pushes the rear part away from the front part and creates a distance between these parts and between the rear part and the laminated busbar as well. The rear part is pushed away from the rear side of the laminated busbar. The conductive bridging sheet of the rear part then is distant from an electrically contact area of an electrically conductive sheet of the laminated busbar.

The spring is a coil spring and surrounds a guiding rod, wherein the coil spring with a first end abuts on a head of the guiding rod and abuts with a second end on a holder. Through this the rear part is guided in a definite way and the laminated busbar and the rear part are protected against damages.

The rear part is connected with the holder and is movable relative to the holder. Advantageously, the holder is connectable by fixing means with a frame of a switchgear or of a switchboard or of a housing. Through this, the rear part may be part of a preassembled device, which is attached to a frame of a switchgear or of a switchboard or of a housing. Insofar a kind of preassembling of the rear part is used.

A kind of preassembling of the conductor or shipping split connection with pressure clamps may be used, preferably into a left hand side section, before sections are aligned and connected together.

Advantageously, the clamps are connected with a console, wherein one console is connected to the front part and/ or wherein one console is connected to the rear part. The console is a part, preassembled with clamps, which may be connected to the rear part or the front part in an easy way. Preferably the console is made of metal.

Further advantageously, the clamps are fixed in positions on the console by a fixing console. One or more fixing consoles may be screwed to the console, which bears the clamps. A fixing console may be arranged between two clamps and may space these clamps from each other. The fixing console may be made of metal.

Advantageously, the rear part is part of a preassembled device, which is connected with the holder. Through this, the rear part may be attached to a frame of a switch-gear or of a switchboard or of a housing by the holder. No worker is necessary on the rear side of a housing or of a switchgear when the rear part and the front part are moved to the laminated busbars.

Further advantageously, a console is glued to the rear part and/ or a console is glued to the front part. A glue or an adhesive is easy to apply.

Advantageously an arrangement comprises a housing with a frame, wherein a holder is connected to the frame, at least one laminated busbar and a conductor as described in this specification, wherein the rear part is connected to the holder and wherein the rear part is movable relative to the holder.

The switchgear preferably is a low voltage switchgear.

In the drawings:
- Fig. 1: schematically shows a sheet metal console, which is glued to a front part or a rear part of a conductor or shipping split connection, wherein contact areas to apply glue are provided,
- Fig. 2: shows the sheet metal console of Fig. 1, wherein clamps are placed on defined positions on the sheet metal console,
- Fig. 3: shows that the clamps are fixed in their defined positions by two fixing consoles, which may be screwed to the sheet metal console,
- Fig. 4: schematically shows a rear view of the installation process of the rear part of the shipping split connection, wherein a laminated busbar is arranged in a left hand side section and wherein a holder for preassembling the rear part of the shipping split connection is provided and wherein slots for a vertical position adjustment of the holder are provided,
- Fig. 5: schematically shows the rear view of Fig. 4, wherein guiding rods with springs are arranged and wherein the rear part of the shipping split connection is provided with pressure plates or clamps,
- Fig. 6: shows a detailed sectional view of the rear part of Fig. 5 from above, and
- Fig. 7: shows the electrical connection of two neighbored laminated busbars after section alignment, wherein bolts are tightened by turning and the rear part of the shipping split connection is pulled to the front and will create an electrically conductive bridge between the neighbored laminated busbars.

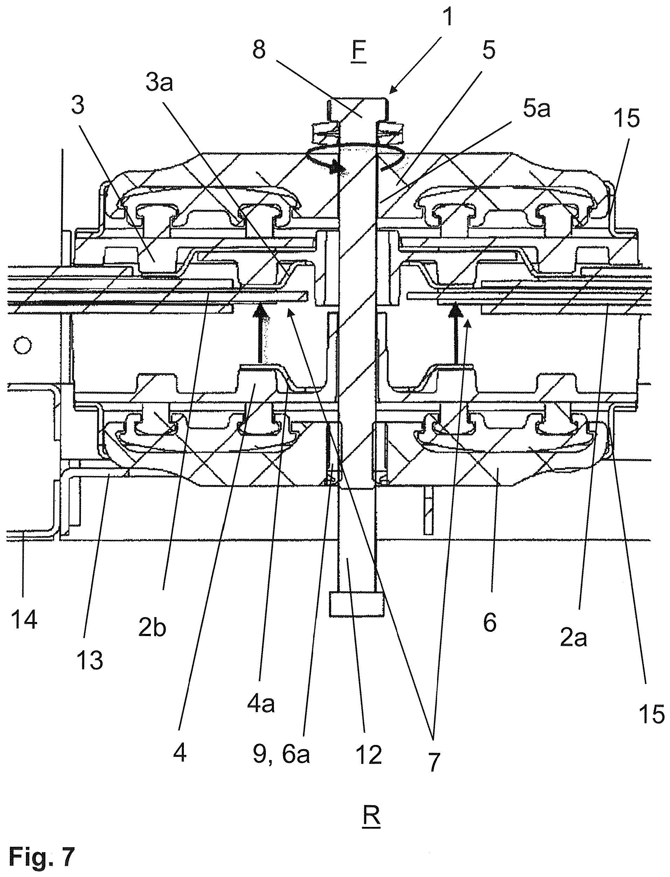

Fig. 7 shows a conductor 1, also called a shipping split connection, to electrically connect two neighbored laminated busbars 2a, 2b of a switchgear, comprising a front part 3 and a rear part 4 and pressure clamps 5, 6 to press the front part 3 and the rear part 4 against said laminated busbars 2a, 2b, wherein the front part 3 comprises at least one front conductive bridging sheet 3a and wherein the rear part 4 comprises at least one rear conductive bridging sheet 4a. Those conductive bridging sheets 3a, 4a get in overlapping contact with respective electrical contact areas 7 of the laminated busbars 2a, 2b to conduct electrical current from one laminated busbar 2a to the other laminated busbar 2b. Each respective conductive sheet of the left laminated busbar 2a is connected electrically by the conductor 1 with the respective conductive sheet of the right laminated busbar 2b, wherein those conductive sheets or better their blank contact areas face against each other and are arranged coplanar. The conductor 1 acts as a bridge between those conductive sheets facing each other. The front side F and the rear side R of the switchgear lie on different sides of the conductor 1.

The rear part 4 is movable relative to the front part 3 in the direction of the arrows of Fig. 7, wherein the front part 3 comprises an actor 8, which is couplable with a counterpart 9 of the rear part 4 and wherein moving or acting the actor 8 moves the rear part 4 to the front part 3.

The actor 8 is a bolt which engages in an entry of the rear part 4 and meshes with a thread of the entry. The entry is the said counterpart 9. The bolt is turned to move the rear part 4.

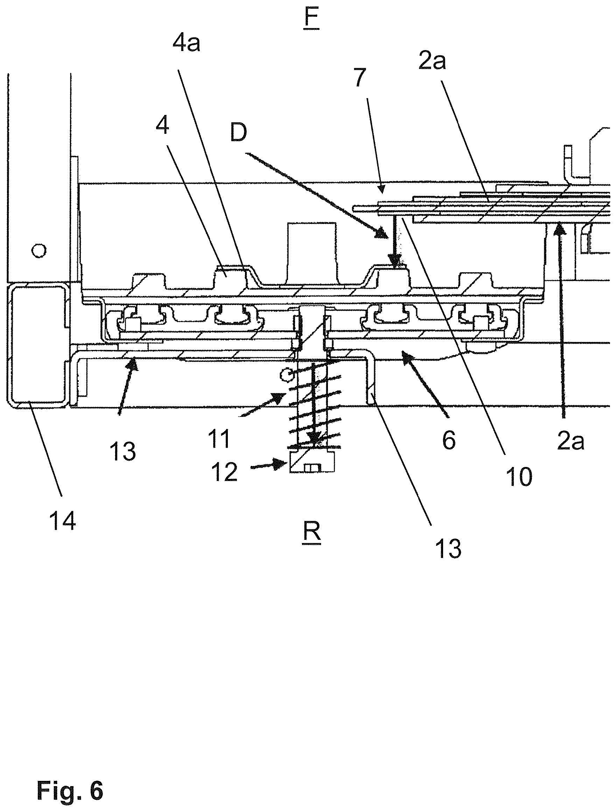

Fig. 6 shows, that the actor 8 pulls the rear part 4 against the force of a spring 11 in the direction of the front part 3. The spring 11 creates a distance D of 20 mm between the rear conductive bridging sheet 4a and the respective contact area of a conductive sheet 10 of the laminated busbar 2a. The spring 11 is a coil spring and surrounds a guiding rod 12, wherein the coil spring with a first end abuts on a head of the guiding rod 12 and abuts with a second end on a holder 13. The rear part 4 is connected with the holder 13 and is movable relative to the holder 13, wherein the holder 13 is connected by fixing means with a frame 14 of a switch-gear or of a switchboard or of a housing.

Fig. 7 show that the clamps 5, 6 are connected with consoles 15, wherein one console 15 is connected to the front part 3 and wherein one console 15 is connected to the rear part 4.

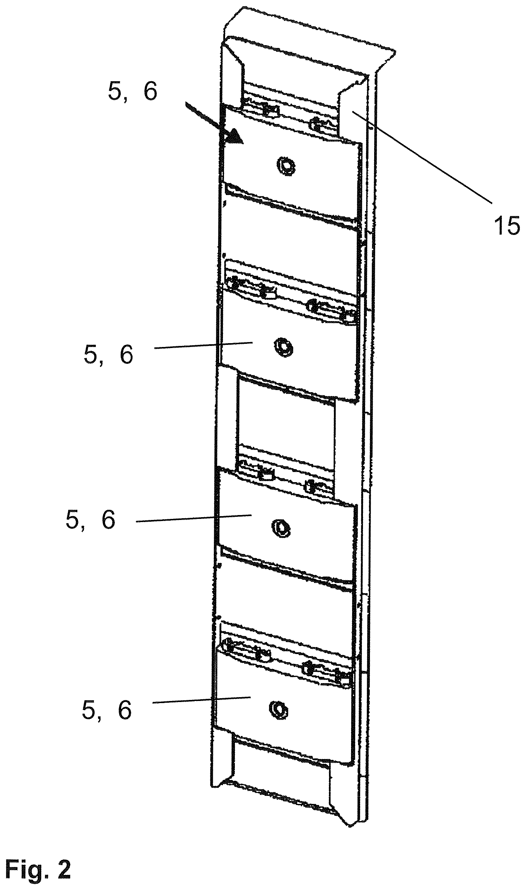

Fig. 6 and 7 show, that the rear part 4 is part of a preassembled device, which is connected with the holder 13. Fig. 2 schematically shows that the clamps 5, 6 are fixed in positions on each console 15 by fixing consoles 16. One console 15 is glued to the rear part 4 and another console 15 is glued to the front part 3.

Insofar Fig. 7 shows an arrangement, comprising a housing with a frame 14, wherein a holder 13 is connected to the frame 14, at least on laminated busbar 2a, 2b and a conductor 1, wherein the rear part 4 is connected to the holder 13 and wherein the rear part 4 is movable relative to the holder 13 in the direction of the front part 3, namely in direction of the front side F.

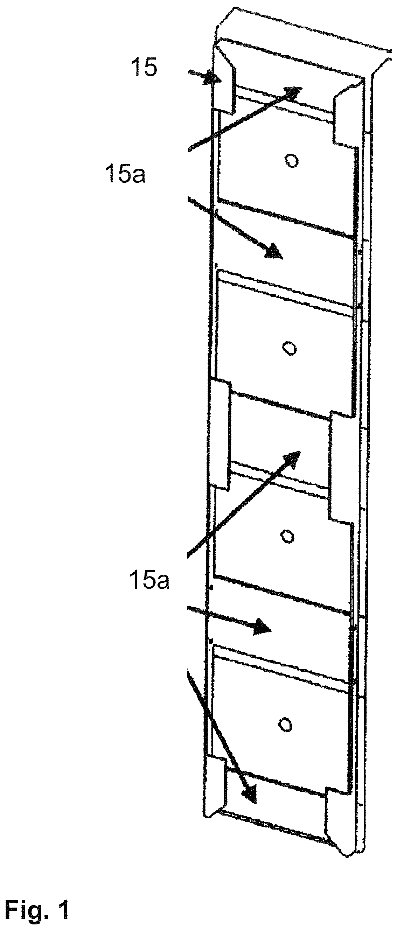

Fig. 1 shows a sheet metal console 15, which may be or is glued to a front part 3 or a rear part 4 of a shipping split connection, namely of the conductor 1 described here, wherein contact areas 15a to apply glue are provided.

Fig. 2 shows the sheet metal console 15 of Fig. 1, wherein the clamps 5, 6 are placed on defined positions on the sheet metal console 15. The pressure clamps 5, 6 are assembled to both parts, front part 3 and rear part 4 of the conductor 1, by the said sheet metal consoles 15. A sheet metal console 15 is glued to the rear part 4, then the pressure clamps 5, 6 are placed and secured in position by two smaller fixing consoles 16.

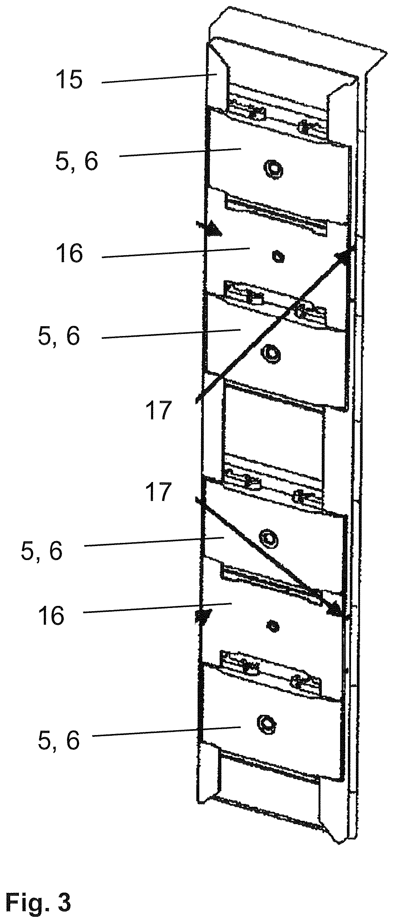

Fig. 3 shows that the four clamps 5, 6 are fixed in their defined positions by the said two fixing consoles 16, which may be screwed to the sheet metal console 15. Therefore the console 15 comprises holes 17 for fixing the fixing consoles 16. Pressure clamps 6 with insert nuts 6a are assembled to the rear part 4 of the conductor 1 and pressure clamps 5 with a hole 5a for a bolt 8 are assembled to the front part 3 of the conductor 1, as it is shown by Fig. 7.

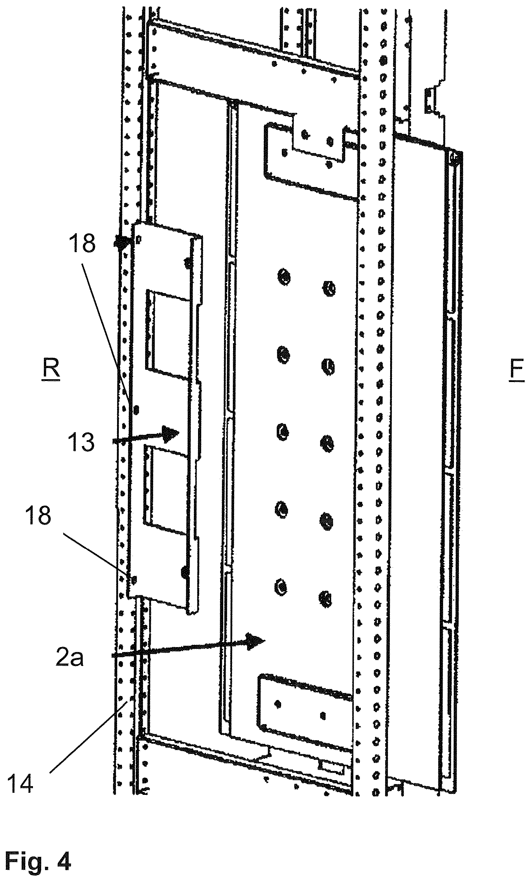

Fig. 4 schematically shows a rear view of an installation process of the rear part 4 of the conductor 1, wherein a laminated busbar 2a is arranged in a left hand side section and wherein the holder 13 for preassembling the rear part 4 of the shipping split connection is provided and wherein slots 18 for a vertical position adjustment of the holder 13 are provided.

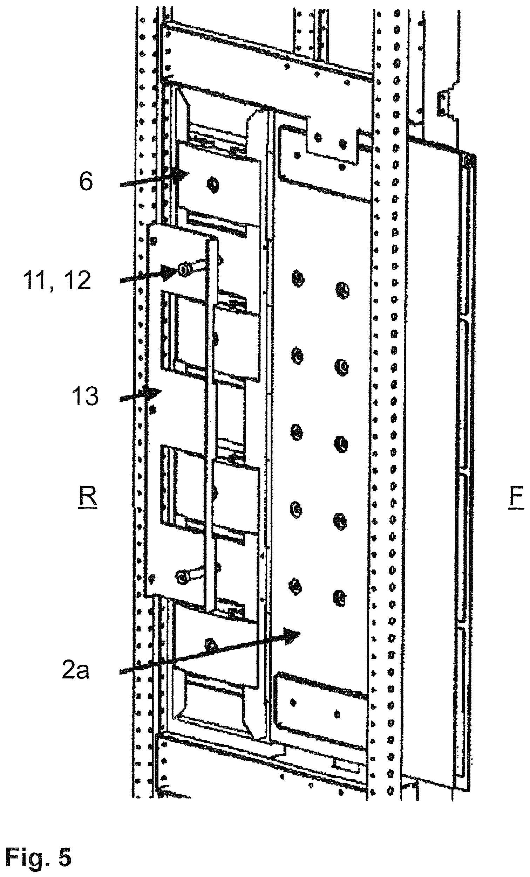

Fig. 5 schematically shows the rear view of Fig. 4, wherein guiding rods 12 with springs 11 are arranged and wherein the rear part 4 of the conductor 1 is provided with pressure plates or clamps 6. The sheet metal console 15 is assembled to the left hand side section of a switchgear arrangement. Its purpose is to hold the rear part 4 of the conductor 1 with pressure clamps 6 in a correct position and to protect parts of laminated busbars 2a and the conductor 1 from damage during a section alignment procedure.

To prevent damage of the conductor 1 or laminated busbars 2a, 2b during an alignment of sections, the holder 13 of the rear part 4 of the conductor 1 includes the guiding rods 12, which allows the rear part 4 of the conductor 1 to be moved in front and rear direction, and springs 11, which push the rear part 4 of the conductor 1 to the rear side R to prevent a collision with the laminated busbar 2b of the neighbor section during the alignment of the sections. The holder 13 of the conductor 1 can compensate vertical misalignment and can ensure a correct conductor overlap of the conductor 1 and the laminated busbars 2a, 2b.

After alignment and connection of the sections or of the laminated busbars 2a, 2b, the front part 3 of the conductor 1 is placed with pressure plates or clamps 5 in a correct position from the section front side F, bolts 8 are inserted into clamps 5 and by tightening the bolts 8 the rear part 4 of the conductor 1 is pulled towards the laminated busbar contact areas and provides a conductive contact between neighbored laminated busbars 2a, 2b.

The switchgear preferably is a low voltage switchgear. The switchgear comprises a housing with a frame 14 as described above.

### Reference numbers

| | |
|---|---|
| 1 | Conductor or shipping split connection |
| 2a, 2b | Laminated busbar (left, right) |
| 3 | Front part of 1 |
| 3a | Front conductive bridging sheet |
| 4 | Rear part of 1 |
| 4a | Rear conductive bridging sheet |
| 5 | Clamp of 3 |
| 5a | Hole of 5 |
| 6 | Clamp of 4 |
| 6a | Insert nut of 6 |
| 7 | Contact area of 2a or 2b |
| 8 | Bolt |
| 9 | Counterpart |
| 10 | Conductive sheet of 2a |
| 11 | Spring |
| 12 | Guiding rod |
| 13 | Holder |
| 14 | Frame |
| 15 | Console |
| 15a | Contact area to apply glue |
| 16 | Fixing console |
| 17 | Hole of 15 |
| 18 | Slot of 13 or 14 |
| F | Front side |
| R | Rear side |

## Claims

1. Conductor (1) to electrically connect two neighbored laminated busbars (2a, 2b) of a switchgear, comprising a front part (3) and a rear part (4) and pressure clamps (5, 6) to press the front part (3) and the rear part (4) against said laminated busbars (2a, 2b), wherein the front part (3) comprises at least one front conductive bridging sheet (3a), wherein the rear part (4) comprises at least one rear conductive bridging sheet (4a), wherein the rear part (4) is movable relative to the front part (3), wherein the front part (3) comprises an actor (8), which is couplable with a counterpart (9) of the rear part (4), and wherein moving the actor (8) moves the rear part (4) in the direction of the front part (3), wherein the actor (8) pulls the rear part (4) against the force of a spring (11) in the direction of the front part (3),
**characterized in that** the spring (11) is a coil spring, the conductor (1) comprises a holder (13) connectable to a frame (14) of the switchgear, the rear part (4) being connected with the holder (13) and being movable relative to it, the holder (13) including a guiding rod (12) which allows the rear part (4) of the conductor to be moved in the front and rear directions, **in that** the coil spring surrounds the guiding rod (12) and **in that** the coil spring with a first end abuts on a head of the guiding rod (12) and abuts with a second end on the holder (13).

2. Conductor according to claim 1, **characterized in that** the actor (8) is a bolt which engages in an entry or insert nut (6a) of the rear part (4) and meshes with a thread of the entry or insert nut (6a).

3. Conductor according to one of the preceding claims, **characterized in that** the holder (13) is connectable by fixing means with a frame (14) of the switchgear or of a switchboard or of a housing.

4. Conductor according to claim 3, **characterized in that** the rear part (4) is part of a preassembled device, which is connectable with the holder (13).

5. Arrangement, comprising a housing with a frame (14), wherein a holder (13) is connected to the frame (14), at least one laminated busbar (2a, 2b) and a conductor (1) according to one of the preceding claims.

6. Arrangement according to claim 5, **characterized in that** the clamps (5, 6) are connected with a console (15), wherein one console (15) is connected to the front part (3) and/ or wherein one console (15) is connected to the rear part (4).

7. Arrangement according to claim 6, **characterized in that** the clamps (5, 6) are fixed in positions on the console (15) by a fixing console (16).

8. Arrangement according to one of the claims 5 to 7, **characterized in that** a console (15) is glued to the rear part (4) and/ or that a console (15) is glued to the front part (3).

## Patentansprüche

1. Leiter (1) zum elektrischen Verbinden zweier benachbarter laminierter Sammelschienen (2a, 2b) einer Schaltanlage, umfassend einen vorderen Teil (3) und einen hinteren Teil (4) und Druckklemmen (5, 6), um den vorderen Teil (3) und den hinteren Teil (4) gegen die laminierten Stromschienen (2a, 2b) zu pressen, wobei der vordere Teil (3) mindestens ein vorderes leitfähiges Überbrückungsblech (3a) umfasst, wobei der hintere Teil (4) mindestens ein hinteres leitfähiges Überbrückungsblech (4a) umfasst, wobei der hintere Teil (4) relativ zu dem vorderen Teil (3) beweglich ist, wobei der vordere Teil (3) einen Aktor (8) umfasst, der mit einem Gegenstück (9) des hinteren Teils (4) koppelbar ist, und wobei das Bewegen des Aktors (8) den hinteren Teil (4) in Richtung des vorderen Teils (3) bewegt, wobei der Aktor (8) den hinteren Teil (4) gegen die Kraft einer Feder (11) in Richtung des vorderen Teils (3) zieht, **dadurch gekennzeichnet, dass**
die Feder (11) eine Schraubenfeder ist, der Leiter (1) einen Halter (13) umfasst, der mit einem Rahmen (14) der Schaltanlage verbindbar ist, wobei der hintere Teil (4) mit dem Halter (13) verbunden und relativ zu diesem beweglich ist, wobei der Halter (13) eine Führungsstange (12) aufweist, die eine Bewegung des hinteren Teils (4) des Leiters in der vorderen und hinteren Richtung ermöglicht, dass die Schraubenfeder die Führungsstange (12) umgibt und dass die Schraubenfeder mit einem ersten Ende an einem Kopf der Führungsstange (12) anliegt und mit einem zweiten Ende an der Halterung (13) anliegt.

2. Leiter nach Anspruch 1, **dadurch gekennzeichnet, dass** der Aktor (8) ein Bolzen ist, der in eine Einlaufmutter (6a) des hinteren Teils (4) eingreift und mit einem Gewinde der Einlaufmutter (6a) kämmt.

3. Leiter nach einem der vorhergehenden Ansprüche, **dadurch gekennzeichnet, dass** der Halter (13) durch Befestigungsmittel mit einem Rahmen (14) der Schaltanlage oder einer Schalttafel oder eines Gehäuses verbindbar ist.

4. Leiter nach Anspruch 3, **dadurch gekennzeichnet, dass** der hintere Teil (4) Teil einer vormontierten Vorrichtung ist, die mit der Halterung (13) verbindbar ist.

5. Anordnung, umfassend ein Gehäuse mit einem Rahmen (14), wobei ein Halter (13) mit dem Rahmen (14), mindestens einer laminierten Sammelschiene (2a, 2b) und einem Leiter (1) nach einem der vorhergehenden Ansprüche verbunden ist.

6. Anordnung nach Anspruch 5, **dadurch gekennzeichnet, dass** die Klammern (5, 6) mit einer Konsole (15) verbunden sind, wobei eine Konsole (15) mit dem vorderen Teil (3) verbunden ist und/oder wobei eine Konsole (15) mit dem hinteren Teil (4) verbunden ist.

7. Anordnung nach Anspruch 6, **dadurch gekennzeichnet, dass** die Klammern (5, 6) durch eine Fixierkonsole (16) an der Konsole (15) lagefixiert sind.

8. Anordnung nach einem der Ansprüche 5 bis 7, **dadurch gekennzeichnet, dass** eine Konsole (15) mit dem hinteren Teil (4) verklebt ist und/oder dass eine Konsole (15) mit dem vorderen Teil (3) verklebt ist.

## Revendications

1. Conducteur (1) destiné à raccorder électriquement deux barres omnibus stratifiées voisines (2a, 2b) d'un appareillage de commutation, comprenant une partie avant (3) et une partie arrière (4) et des pièces de serrage à pression (5, 6) destinées à presser la partie avant (3) et la partie arrière (4) contre lesdites barres omnibus stratifiées (2a, 2b), dans lequel la partie avant (3) comprend au moins une feuille de pontage conductrice avant (3a), dans lequel la partie arrière (4) comprend au moins une feuille de pontage conductrice arrière (4a), dans lequel la partie arrière (4) est mobile relativement à la partie avant (3), dans lequel la partie avant (3) comprend un actionneur (8), qui est couplable à une contrepartie (9) de la partie arrière (4), et dans lequel la mise en mouvement de l'actionneur (8) meut la partie arrière (4) dans la direction de la partie avant (3), dans lequel l'actionneur (8) tire la partie arrière (4) contre la force d'un ressort (11) dans la direction de la partie avant (3),
**caractérisé en ce que**
le ressort (11) est un ressort hélicoïdal, le conducteur (1) comprend un dispositif de retenue (13) raccordable à un cadre (14) de l'appareillage de commutation, la partie arrière (4) étant raccordée au dispositif de retenue (13) et étant mobile relativement à celui-ci, le dispositif de retenue (13) incluant une tige de guidage (12) qui permet à la partie arrière (4) du conducteur d'être mue dans les directions avant et arrière, **en ce que** le ressort hélicoïdal entoure la tige de guidage (12) et **en ce que** le ressort hélicoïdal avec une première extrémité vient en butée sur une tête de la tige de guidage (12) et vient en butée avec une seconde extrémité sur le dispositif de retenue (13).

2. Conducteur selon la revendication 1, **caractérisé en ce que** l'actionneur (8) est un boulon qui s'engage dans un écrou d'entrée ou d'insertion (6a) de la partie arrière (4) et s'engrène avec un filet de l'écrou d'entrée ou d'insertion (6a).

3. Conducteur selon l'une des revendications précédentes, **caractérisé en ce que** le dispositif de retenue (13) est raccordable par des moyens de fixation à un cadre (14) de l'appareillage de commutation ou d'un tableau ou d'un boîtier.

4. Conducteur selon la revendication 3, **caractérisé en ce que** la partie arrière (4) fait partie d'un dispositif préassemblé, qui est raccordable au dispositif de retenue (13).

5. Agencement, comprenant un boîtier avec un cadre (14), dans lequel un dispositif de retenue (13) est raccordé au cadre (14), au moins une barre omnibus stratifiée (2a, 2b) et un conducteur (1) selon l'une des revendications précédentes.

6. Agencement selon la revendication 5, **caractérisé en ce que** les pièces de serrage (5, 6) sont raccordées à une console (15), dans lequel une console (15) est raccordée à la partie avant (3) et/ou dans lequel une console (15) est raccordée à la partie arrière (4).

7. Agencement selon la revendication 6, **caractérisé en ce que** les pièces de serrage (5, 6) sont fixées en positions sur la console (15) par une console de fixation (16).

8. Agencement selon l'une des revendications 5 à 7, **caractérisé en ce qu'**une console (15) est collée à la partie arrière (4) et/ou qu'une console (15) est collée à la partie avant (3).
